# FASCICULE DE BREVET EUROPEEN

(11) **EP 0 783 961 B1**
(45) Date de publication et mention de la délivrance du brevet: **18.06.2003**
(21) Numéro de dépôt: 97400033.3
(22) Date de dépôt: 08.01.1997
(51) Int. Cl.: B32B 17/10, C03C 27/12, B32B 31/00

(54) **Vitrage feuilleté de protection solaire, de protection mécanique et de protection au feu**
Verbundglasschiebe für Sonnenschutz, mechanischer Schutz, und Feuerschutz.
Laminated glazing for sun-ray protection, mechanical protection and fire-protection

(30) Priorité: 15.01.1996 FR 9600382
(43) Date de publication de la demande: 16.07.1997
(73) Titulaire: SAINT-GOBAIN GLASS FRANCE, 92400 Courbevoie (FR)
(72) Inventeur: Dussouchaux, Yannick, 33230 Coutras (FR); Wattiaux, Gilles, 33230 Chamadelle (FR)
(74) Mandataire: Le Cam, Stéphane Georges Elie

(56) Documents cités:
- EP-A- 0 279 634
- EP-A- 0 320 674
- EP-A- 0 769 595
- US-A- 2 382 566
- US-A- 3 307 999
- Ullmann's Encyclopedia of Industrial Chemistry, 5me ed., tome A12; VCH Verlagsgesellschaft mbH, Weinheim (DE); p. 426, 427 (1989)

## Description

L'invention concerne un vitrage feuilleté constitué d'au moins deux panneaux transparents séparés par un complexe à base d'une résine. Il est destiné à assurer une protection des locaux ou des véhicules soit contre les excès d'énergie solaire, soit contre une agression mécanique, soit encore contre le feu.

Les vitrages de sécurité feuilletés constitués de deux panneaux, en particulier de deux panneaux de verre sont associés par une résine en général transparente. Ils sont soit obtenus par couche coulée à froid, soit obtenus par l'association de feuilles thermoplastiques comme par exemple en polyvinylbutyral et traités dans un autoclave.

Il est également connu d'intégrer dans la résine d'un vitrage de sécurité feuilleté un réseau de fils, soit pour assurer une fonction d'alarme lorsque les fils sont interrompus suite à une agression, soit pour assurer le chauffage de l'ensemble. Le problème technique que l'invention se donne pour tâche de résoudre est d'améliorer les performances des produits du type précédent en leur donnant une résistance mécanique nettement supérieure ou bien une protection solaire améliorée ou encore une protection anti-feu supérieure.

Le brevet US-2 382 566 décrit un vitrage dans lequel un écran constitué par un réseau de lamelles métalliques et de fils assemblés pour former une sorte de store vénitien en miniature est noyé dans un panneau de substances transparentes. Dans une variante de l'invention précédente, on propose que l'écran soit placé entre deux plaques de verre dont il constitue l'intercalaire. Le document précédent décrit ainsi un produit à performances anti-solaires améliorées qui est constitué, soit d'une unique résine dans laquelle est noyé un écran, soit d'un double vitrage dans lequel est inséré le store vénitien miniature.

Le premier produit présente un état de surface qui est celui de la résine qui le constitue, il peut s'agir par exemple de méthacrylate de méthyle dont la surface est susceptible d'être facilement rayée lors du nettoyage. La deuxième variante présente de grandes difficultés de montage de l'écran à l'intérieur du vitrage isolant et présente également des défauts lorsque l'écran se dilate par suite de son échauffement.

L'invention propose un vitrage feuilleté constitué d'au moins deux panneaux transparents séparés par un complexe à base d'une résine dans lequel, dans le complexe est noyé un écran qui comporte une tôle métallique perforée ou non, débordante sur au moins un côté, et qui fournit au vitrage un rôle de protection solaire, de protection mécanique, et/ou de protection au feu , la tôle étant pliée du côté débordant. De préférence, le complexe comporte deux films d'une résine thermoplastique telle qu'à base de polyvinylbutyral entre lesquels est noyé l'écran.

La constitution du vitrage feuilleté de l'invention garantit que l'écran qui est protégé entre les deux films de résine thermoplastiques, eux-mêmes protégés par deux plaques transparentes, soit facile à entretenir, et ne risque pas d'être détérioré lors d'un usage normal du vitrage.

Le mode de réalisation préféré de l'invention comporte comme écran une tôle métallique perforée ou non, de préférence son épaisseur est comprise entre 0,4 et 1,2 mm. Cette tôle peut jouer donc évidemment un rôle de protection mécanique mais elle peut également accroître la protection contre l'incendie et par ailleurs elle est susceptible d'agrémenter le panneau au sein duquel elle se trouve grâce à ses caractéristiques esthétiques qui sont très différentes de celles d'un vitrage habituel.

La tôle est débordante sur au moins un côté, la partie débordante étant pliée. Cet élément permet, entre autres, une fixation des panneaux les uns aux autres par l'intermédiaire de ces tôles ou bien une fixation des panneaux à la structure du bâtiment dans lequel il se trouve.

Il peut être avantageux que les panneaux transparents soient en verre trempé. Cela donne au produit une résistance accrue et en particulier lui permet de subir sans dommage toutes les étapes de la fabrication.

Pour réaliser les vitrages de l'invention, il est proposé un procédé dans lequel le collage entre les panneaux transparents et la résine est réalisé dans un autoclave, le vitrage étant placé à l'intérieur d'un sac. L'invention prévoit en plus qu'avant de chauffer, on soumette le vitrage à une pression faible et que la durée de la phase de collage à la température maximum soit comprise entre 130 et 250 % et de préférence, qu'elle soit au moins du double de la durée nécessaire à la réalisation d'un vitrage identique sans écran.

Le procédé mis au point par les inventeurs garantit que lors du passage en autoclave il n'apparaisse aucune bulle ni aucune délamination, en particulier dans les perforations des tôles.

La description et les figures permettront de comprendre l'invention et d'en saisir tous les avantages :
- la **figure 1** montre un vitrage de l'invention équipé d'une tôle perforée,
- la **figure 2** est une coupe de la figure 1.

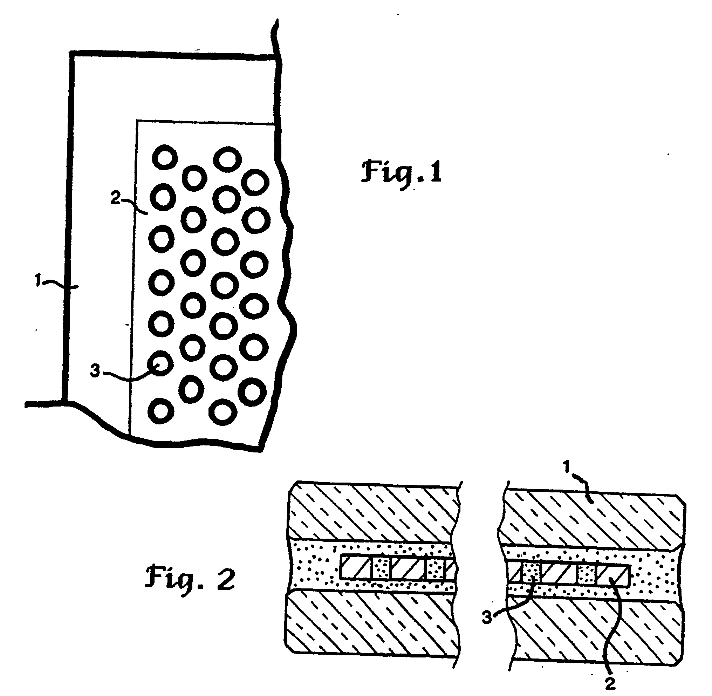

Pour réaliser le produit représenté **figure 1**, on a commencé par découper puis tremper deux plaques de verre d'une épaisseur de 6 mm dans les dimensions de 384 x 109 cm. Simultanément, on avait préparé une tôle de dimension 380 x 105 cm dans l'épaisseur de 0,5 mm qui comportait sur toute la partie centrale de sa surface des perforations circulaires de diamètre 6 mm. Le matériau de la tôle était de l'acier inoxydable et la tôle était dégraissée et passivée. Dans un atelier d'assemblage de verre feuilleté, on a alors déposé sur le premier verre de 6 mm un film de polyvinylbutyral d'épaisseur 1,52 mm, puis la tôle, puis un deuxième film de polyvinylbutyral également de 1,52 mm et enfin le deuxième verre trempé de 6 mm. L'assemblage feuilleté a alors été introduit dans une poche telle que celle qu'on utilise pour le collage des vitrages feuilletés. On a aspiré à l'intérieur de la poche jusqu'à une pression résiduelle de 30 000 pascals et on a maintenu cette pression pendant une durée de 24 heures. Le sac et le vitrage qu'il contenait ont alors été introduits à l'intérieur d'un autoclave et la température y fut portée jusqu'à une température sensiblement supérieure à la température habituelle pour réaliser des vitrages du type précédent dans lesquels on n'a pas introduit de plaques de tôle. D'excellents résultats ont été obtenus avec le double de cette température. De même, la durée de l'application de la pression à température élevée est de préférence le double de ce qu'elle est au cours de la mise en oeuvre du procédé traditionnel pour des vitrages du type précédent ne comportant pas d'écran. Les produits du type qu'on vient de décrire sont habituellement très difficiles à fabriquer et sans les précautions précédentes, on obtient un produit comportant de nombreux défauts tels que des bulles ou de mauvais collages. De plus, avec la procédure habituelle, de nouveaux défauts apparaissent ultérieurement au cours de la vie du vitrage.

En effet, comme on le voit sur la **figure 2**, il est très difficile d'obtenir que la résine pénètre dans les trous 3 sans emprisonner d'inclusions gazeuses. Au début du processus d'assemblage et de collage, les trous 3 de la tôle sont vides, ils ne sont remplis qu'avec de l'air. Au cours du ramollissement de la résine et de sa pénétration à l'intérieur des trous, il est notamment très important d'éviter que des bulles d'air ne restent incluses dans les espaces qui étaient libres auparavant. La technique qu'on vient de décrire permet d'éviter cette inclusion.

Les descriptions des documents anciens concernant des produits voisins de celui qu'on vient de décrire et qui comportaient des jalousies insérées dans une résine, par exemple le document US-2 382 566, ne donnaient aucun détail sur la technique de mise en oeuvre. Il semble bien que les techniques habituelles soient celles des résines thermodurcissables qui sont mises en oeuvre sous forme très liquide et qui durcissent ensuite après avoir pénétré à l'intérieur des orifices du réseau.

De telles techniques de couche coulée qui peuvent également être utilisées entre deux verres ne sont pas très industrielles. La technique de l'invention, en revanche, puisqu'elle utilise des films de résine thermoplastique, est tout à fait traditionnelle dans l'industrie et permet des coûts de revient bas. Le produit insérant le KOOLSHADE dans un vitrage qu'on vient de décrire a évidemment des application anti-solaires. Il permet d'empêcher le rayonnement solaire direct de pénétrer dans un local tout en laissant la possibilité de voir ce qui se passe à l'extérieur.

D'une manière générale les produits de l'invention ont des applications multiples. Ils peuvent par exemple servir de cloisons de séparation entre locaux. Dans certains conditions d'éclairement, ils peuvent également servir de parois optiquement semi-perméables. C'est-à-dire que par exemple lorsqu'on utilise une jalousie très claire, blanche notamment, et que d'un côté elle est éclairée très fortement, une personne qui se trouve dans l'ombre de l'autre côté peut observer sans être vue. On a déjà parlé plus haut des propriétés anti-feu qui sont améliorées par une tôle à l'intérieur du vitrage de l'invention. De même, le produit qu'on a décrit est un retardateur d'effraction particulièrement efficace lorsqu'il contient une tôle très difficile à perforer.

L'insertion d'un écran métallique à l'intérieur d'un vitrage feuilleté permet également de créer une cage de Faraday ce qui peut être très important soit pour protéger un local où on procède à des expériences très sensibles, ou bien si l'on veut avoir une protection contre des ondes radio provenant de l'extérieur. L'application serait également une protection contre les indiscrétions liées à l'émission d'ondes radio provenant de téléscripteurs ou d'imprimantes qui pourraient être, sans la création d'une cage de Faraday, perçues depuis l'extérieur d'un local.

## Revendications

1. Vitrage feuilleté constitué d'au moins deux panneaux transparents séparés par un complexe à base d'une résine, dans lequel est noyé un écran qui comporte une tôle métallique perforée ou non, débordante sur au moins un côté, et qui fournit au vitrage un rôle de protection solaire, de protection mécanique et/ou de protection au feu, **caractérisé en ce que** la tôle est pliée du côté débordant.

2. Vitrage feuilleté selon la revendication 1, **caractérisé en ce que** le complexe comporte deux films d'une résine thermoplastique tels qu'à base de polyvinylbutyral entre lesquels est noyé l'écran.

3. Vitrage feuilleté selon la revendication 1 ou 2, **caractérisé en ce que** la tôle a une épaisseur entre 0,4 et 1,2 mm.

4. Vitrage feuilleté selon l'une des revendications précédentes, **caractérisé en ce que** la tôle a des dimensions inférieures à celles des panneaux transparents et **en ce qu'**elle est entourée de résine de tous côtés.

5. Vitrage feuilleté selon l'une des revendications précédentes, **caractérisé en ce qu'**il est relié à un vitrage voisin et/ou à la structure d'un bâtiment à l'aide de la tôle débordante.

6. Vitrage feuilleté selon l'une des revendications précédentes, **caractérisé en ce que** les panneaux transparents sont en verre trempé.

## Patentansprüche

1. Verbundglas, das aus mindestens zwei transparenten Scheiben besteht, die durch einen Komplex auf der Basis eines Harzes getrennt sind, in welchem eine Abschirmung eingebettet ist, die ein gegebenenfalls durchlöchertes Metallblech umfasst, das auf wenigstens einer Seite übersteht, und welche dem Glas eine vor Sonne schützende, mechanische und/oder Brandschutzfunktion verleiht, **dadurch gekennzeichnet, dass** das Blech auf der überstehenden Seite umgebogen ist.

2. Verbundglas nach Anspruch 1, **dadurch gekennzeichnet, dass** der Komplex zwei Filme aus einem thermoplastischen Harz wie einem auf der Basis von Polyvinylbutyral umfasst, zwischen welche die Abschirmung eingebettet ist.

3. Verbundglas nach Anspruch 1 oder 2, **dadurch gekennzeichnet, dass** die Dicke des Blechs zwischen 0,4 und 1,2 mm beträgt.

4. Verbundglas nach einem der vorhergehenden Ansprüche, **dadurch gekennzeichnet, dass** das Blech Abmessungen besitzt, die kleiner als die der transparenten Scheiben sind, **und dass** es auf allen Seiten von Harz umgeben ist.

5. Verbundglas nach einem der vorhergehenden Ansprüche, **dadurch gekennzeichnet, dass** es durch das überstehende Blech mit einer benachbarten Verglasung und/oder der Konstruktion eines Gebäudes verbunden ist.

6. Verbundglas nach einem der vorhergehenden Ansprüche, **dadurch gekennzeichnet, dass** die transparenten Scheiben aus vorgespanntem Glas bestehen.

## Claims

1. Laminated glazing pane consisting of at least two transparent panels separated by a complex based on a resin, in which there is embedded a screen which comprises a metallic sheet, perforated or not, projecting on at least one side, and which gives the glazing pane a solar protection, mechanical protection and/or fire protection role, **characterised in that** the sheet is folded on the projecting side.

2. Laminated glazing pane according to Claim 1, **characterised in that** the complex comprises two films of a thermoplastic resin such as with a polyvinyl butyral base, between which the screen is embedded.

3. Laminated glazing pane according to Claim 1 or 2, **characterised in that** the sheet has a thickness of between 0.4 and 1.2 mm.

4. Laminated glazing pane according to one of the preceding claims, **characterised in that** the sheet has dimensions less than those of the transparent panels and **in that** it is surrounded by resin on all sides.

5. Laminated glazing pane according to one of the preceding claims, **characterised in that** it is connected to an adjacent glazing pane and/or to the structure of a building by means of the projecting sheet.

6. Laminated glazing pane according to one of the preceding claims, **characterised in that** the transparent panels are made from toughened glass.
